(19) Europäisches Patentamt
European Patent Office
Office européen des brevets

(11) EP 0 920 989 A2

# (12) EUROPEAN PATENT APPLICATION

(43) Date of publication:
**09.06.1999 Bulletin 1999/23**

(51) Int. Cl.[6]: **B32B 27/32**, C08L 23/10

(21) Application number: **98122566.7**

(22) Date of filing: **02.12.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **03.12.1997 JP 33315297**

(71) Applicants:
- **Mitsui Chemicals, Inc.**
  **Tokyo 100-6070 (JP)**
- **Grand Polymer Co., Ltd.**
  **Tokyo 104-0031 (JP)**

(72) Inventors:
- **Hirose, Toshiyuki**
  **Kuga-gun, Yamaguchi 740-0061 (JP)**
- **Yamamoto, Yohzoh**
  **Kuga-gun, Yamaguchi 740-0061 (JP)**
- **Miura, Keiichi**
  **Ichihara-shi, Chiba 299-0108 (JP)**

(74) Representative: **HOFFMANN - EITLE**
**Patent- und Rechtsanwälte**
**Arabellastrasse 4**
**81925 München (DE)**

## (54) Polyolefin multi-layer laminates and uses thereof

(57) Disclosed is a polyolefin multi-layer laminate comprising at least one cycloolefin resin layer (A) and at least one polypropylene composition layer (B) laminated to each other, said polypropylene composition comprising 50 to 99 % by weight of polypropylene (B-1) and 1 to 50 % by weight of an ethylene/α-olefin copolymer (B-2) obtained by polymerizing ethylene and an α-olefin of 3 to 20 carbon atoms using a metallocene catalyst. The ethylene/α-olefin copolymer (B-2) preferably has a density of less than 0.930 g/cm$^3$. The polyolefin multi-layer laminate can be obtained by co-extrusion molding. Also disclosed are uses of the polyolefin multi-layer laminate. Since the polyolefin multi-layer laminate is excellent in interlaminar strength, vacuum formability and pressure formability as well as in transparency, moisture resistance, oil resistance and damage resistance, the laminate is favorably used as a packaging material.

EP 0 920 989 A2

## Description

### FIELD OF THE INVENTION

The present invention relates to polyolefin multi-layer laminates which are excellent in transparency, moisture resistance, oil resistance, damage resistance, interlaminar strength, vacuum formability and pressure formability and which are favorably used for forming packaging materials such as press-through packs and blister packs. The invention also relates to uses of the polyolefin multi-layer laminates.

### BACKGROUND OF THE INVENTION

Because of their excellent properties such as non-toxicity, transparency and ease of thermoforming, polyolefins have been broadly used heretofore.

Of the polyolefins, cycloolefin resins obtained from cycloolefins having more bulky structure than $\alpha$-olefins such as ethylene and propylene are excellent in transparency, moisture resistance, vacuum formability, pressure formability and dead fold properties, so that application of the cycloolefin resins to various uses has been studied. In particular, the cycloolefin resins showing non-toxicity, excellent transparency and excellent moisture resistance are favorably used as materials for forming medical tools or food containers.

The cycloolefin resins are, however, inferior in oil resistance and damage resistance. In order to solve such problems, an attempt to laminate a polypropylene layer onto a cycloolefin resin layer (sheet or film) so as to form a multi-layer structure has been made. The cycloolefin resins, however, have poor adhesion to polypropylene, so that it is difficult to prepare a laminate having excellent interlaminar strength by co-extrusion molding of the cycloolefin resin and polypropylene.

The present inventors have studied laminates including such a cycloolefin resin layer, and they have proposed, as a laminate having excellent interlaminar strength, a multi-layer sheet or film comprising a cycloolefin resin layer and a polypropylene composition layer which comprises polypropylene and polyethylene having a density of not less than 0.930 g/cm$^3$ (Japanese patent Laid-Open Publication No. 226934/1994).

The present inventors have further studied the laminate of the cycloolefin resin layer and the polypropylene composition layer, and as a result, they have found that if a polypropylene composition comprising polypropylene and an ethylene/$\alpha$-olefin copolymer prepared by the use of a metallocene catalyst is used as the polypropylene composition, a laminate showing remarkably improved interlaminar strength can be obtained. Based on the finding, the present invention has been accomplished.

### OBJECT OF THE INVENTION

The present invention has been made under such circumstances as mentioned above, and it is an object of the invention to provide a polyolefin multi-layer laminate which is excellent in transparency, moisture resistance, oil resistance, damage resistance, interlaminar strength, vacuum formability and pressure formability and which is favorably used for forming packaging materials such as press-through packs and blister packs. It is another object of the invention to provide uses of the polyolefin multi-layer laminate.

### SUMMARY OF THE INVENTION

The polyolefin multi-layer laminate according to the invention comprises:

(A) a cycloolefin resin layer, and
(B) a layer of a polypropylene composition comprising 50 to 99 % by weight of (B-1) polypropylene and 1 to 50 % by weight of (B-2) an ethylene/$\alpha$-olefin copolymer obtained by polymerizing ethylene and an $\alpha$-olefin of 3 to 20 carbon atoms using a metallocene catalyst.

The ethylene/$\alpha$-olefin copolymer (B-2) preferably has a density of less than 0.930 g/cm$^3$.

The polyolefin multi-layer laminate of the invention can be obtained by co-extrusion molding of the cycloolefin resin (A) and the polypropylene composition (B).

The polyolefin multi-layer laminate of the invention is preferably used by forming it into a press-through pack or a blister pack.

DETAILED DESCRIPTION OF THE INVENTION

The polyolefin multi-layer laminate according to the invention and uses thereof are described in detail hereinafter.

The polyolefin multi-layer laminate of the invention comprises:

(A) a cycloolefin resin layer, and
(B) a layer of a polypropylene composition comprising 50 to 99 % by weight of (B-1) polypropylene and 1 to 50 % by weight of (B-2) an ethylene/α-olefin copolymer obtained by polymerizing ethylene and an α-olefin of 3 to 20 carbon atoms using a metallocene catalyst.

First of all, the cycloolefin resin for forming the layer (A) is described.

Cycloolefin resin

The cycloolefin resin for use in the invention is obtained from a cycloolefin represented by the following formula (I) or (II). The cycloolefin is described below.

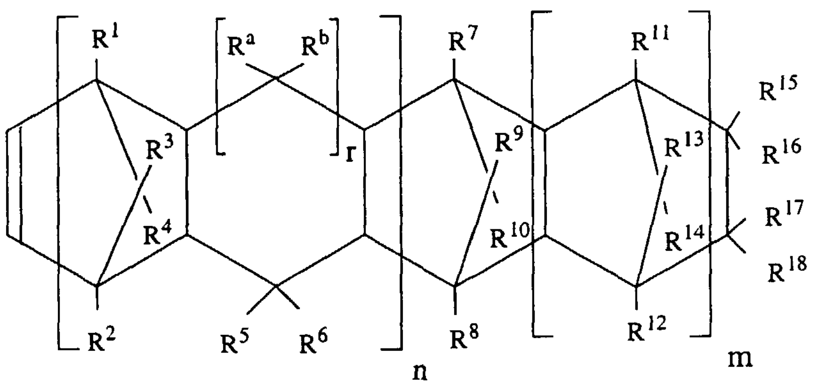

(I)

In the formula (I), n is 0 or 1, m is 0 or a positive integer, and r is 0 or 1. When r is 1, $R^a$ and $R^b$ are each independently the following atom or hydrocaron group, and when r is 0, bonding hands are bonded to each other to form a 5-membered ring.

Each of $R^1$ to $R^{18}$, $R^a$ and $R^b$ independently represents a hydrogen atom, a halogen atom or a hydrocarbon group.

The halogen atom is selected from among fluorine, chlorine, bromine and iodine atoms.

The hydrocarbon group is generally selected from among alkyl groups each having 1 to 20 carbon atoms and cycloalkyl groups and aromatic hydrocarbon groups each having 3 to 15 carbon atoms.

Examples of the above alkyl groups include methyl, ethyl, propyl, isopropyl, amyl, hexyl, octyl, decyl, dodecyl and octadecyl groups.

An example of the above cycloalkyl group is cyclohexyl.

Examples of the above aromatic hydrocarbon groups include phenyl and naphthyl.

These groups may be those substituted with halogen atoms.

In the formula (I), $R^{15}$ to $R^{18}$ may mutually bond (cooperate) to form a monocyclic or polycyclic rings. The thus formed monocyclic or polycyclic rings may have a double bond.

Examples of the above monocyclic ring or polycyclic rings include the following groups:

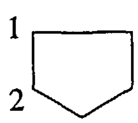 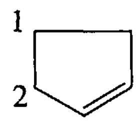 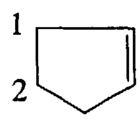 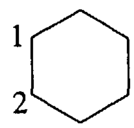 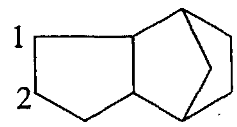

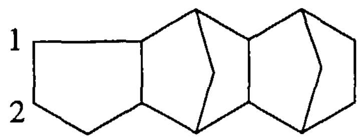 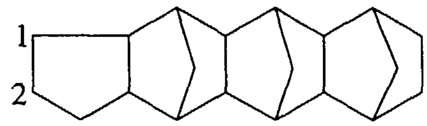

In the above examples of groups, the carbon atoms having numerals 1 and 2 affixed thereto respectively corresponds to those with which $R^{15}$ ($R^{16}$) or $R^{17}$ ($R^{18}$) bond in the formula (I).

$R^{15}$ and $R^{16}$, or $R^{17}$ and $R^{18}$ may cooperate to thereby form an alkylidene group. The alkylidene group has 2 to 20 carbon atoms. Examples of the above alkylidene groups include ethylidene, propylidene and isopropylidene groups.

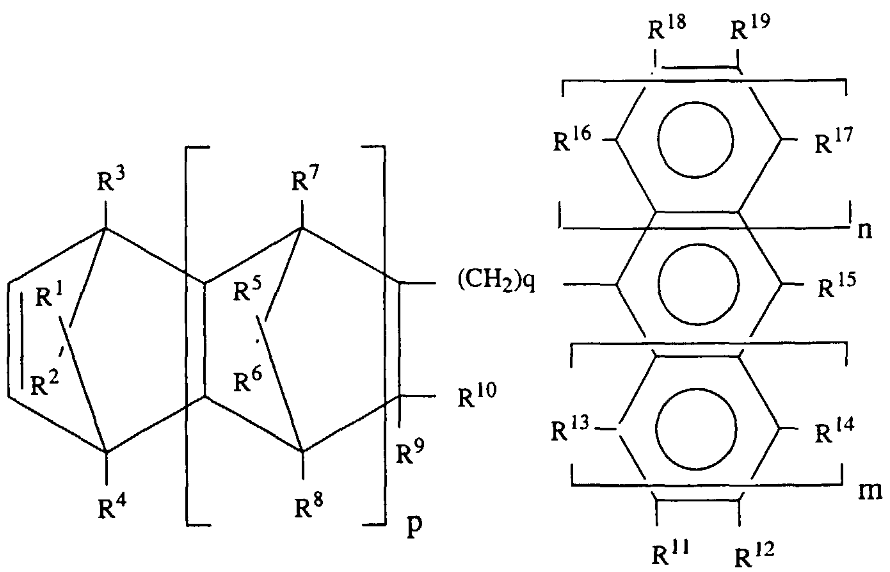

(II)

In the formula (II), each of p and q is 0 or a positive integer, and each of m and n is 0, 1 or 2.

Each of $R^1$ to $R^{19}$ independently represents a hydrogen atom, a halogen atom, a hydrocarbon group, or an alkoxy group.

The halogen atom has the same meaning as the halogen atom in the formula (I).

The hydrocarbon group is selected from among alkyl groups each having 1 to 20 carbon atoms, halogenated alkyl groups each having 1 to 20 carbon atoms, and cycloalkyl groups or aromatic hydrocarbon groups each having 3 to 15 carbon atoms.

Examples of the alkyl groups include methyl, ethyl, propyl, isopropyl, amyl, hexyl, octyl, decyl, dodecyl and octadecyl groups.

An example of cycloalkyl groups is cyclohexyl.

The aromatic hydrocarbon is selected from among aryl and aralkyl groups, and examples thereof include phenyl, tolyl, naphthyl, benzyl and phenylethyl groups. These groups may have a lower alkyl group.

Examples of the above alkoxy groups include methoxy, ethoxy and propoxy groups.

The above-mentioned hydrocarbon groups and alkoxy groups may be substituted with halogen atoms.

The carbon atom with which $R^9$ and $R^{10}$ bond and the carbon atom with which $R^{13}$ bonds or the carbon atom

with which $R^{11}$ bonds may bond with each other directly or through an alkylene group having 1 to 3 carbon atoms. When two carbon atoms bond with each other through an alkylene group, either $R^9$ cooperates with $R^{13}$ or $R^{10}$ with $R^{11}$ to thereby form an alkylene group selected from among methylene ($-CH_2-$), ethylene ($-CH_2CH_2-$) and propylene ($-CH_2CH_2CH_2-$).

When $n = m = 0$ , $R^{15}$ may bond with $R^{12}$ or $R^{15}$ with $R^{19}$ to thereby form an aromatic monocyclic ring or aromatic polycyclic rings. Examples of the aromatic rings formed by $R^{15}$ and $R^{12}$ when $n = m = 0$ are as follows:

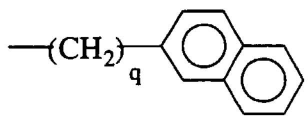

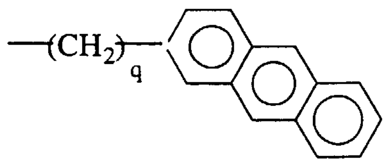

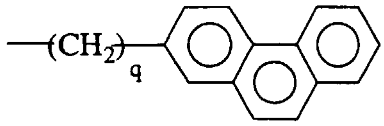

In the above formulae, q has the same meaning as in the formula (II).

Examples of the cycloolefins represented by the formula (I) and (II) include:

bicyclo[2.2.1]-2-heptene (hereinafter sometimes referred to as norbornene) represented by the formula:

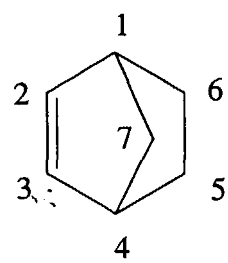

(wherein the numerals 1 to 7 are position numbers of carbons), and derivatives thereof substituted with hydrocarbon groups.

Examples of the hydrocarbon groups include 5-methyl, 5,6-dimethyl, 1-methyl, 5-ethyl, 5-n-butyl, 5-isobutyl, 7-methyl, 5-phenyl, 5-methyl-5-phenyl, 5-benzyl, 5-tolyl, 5-(ethylphenyl), 5-(isopropylphenyl), 5-(biphenyl), 5-(β-naphthyl), 5-(α-naphthyl), 5-(anthracenyl) and 5,6-diphenyl.

Examples of other derivatives include:

bicyclo[2.2.1]-2-heptene derivatives, such as cyclopentadiene-acenaphthylene adducts, 1,4-methano-1,4,4a,9a-tetrahydrofluorene and 1,4-methano-1,4,4a,5,10,10a-hexahydroanthracene;
tricyclo[4.3.0.1$^{2,5}$]-3-decene derivatives, such as tricyclo[4.3.0.1$^{2,5}$]-3-decene, 2-methyltricyclo[4.3.0.1$^{2,5}$]-3-decene and 5-methyltricyclo[4.3.0.1$^{2,5}$]-3-decene;
tricyclo[4.4.0.1$^{2,5}$]-3-undecene derivatives, such as tricyclo[4.4.0.1$^{2,5}$]-3-undecene and 10-methyltricyclo[4.4.0.1$^{2,5}$]-3-undecene; and
tetracyclo[4.4.0.1$^{2,5}$.1$^{7,10}$]-3-dodecene represented by the formula:

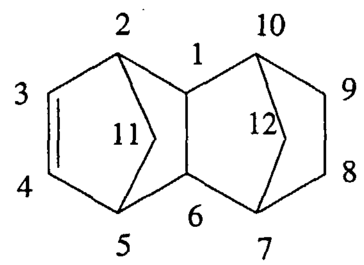

(wherein the numerals 1 to 12 are position numbers of carbons), and derivatives thereof substituted with hydrocarbon groups.

Examples of the hydrocarbon groups include 8-methyl, 8-ethyl, 8-propyl, 8-butyl, 8-isobutyl, 8-hexyl, 8-cyclohexyl, 8-stearyl, 5,10-dimethyl, 2,10-dimethyl, 8,9-dimethyl, 8-ethyl-9-methyl, 11,12-dimethyl, 2,7,9-trimethyl, 2,7-dimethyl-9-ethyl, 9-isobutyl-2,7-dimethyl, 9,11,12-trimethyl, 9-ethyl-11,12-dimethyl, 9-isobutyl-11,12-dimethyl, 5,8,9,10-tetramethyl, 8-ethylidene, 8-ethylidene-9-methyl, 8-ethylidene-9-ethyl, 8-ethylidene-9-isopropyl, 8-ethylidene-9-butyl, 8-n-propylidene, 8-n-propylidene-9-methyl, 8-n-propylidene-9-ethyl, 8-n-propylidene-9-isopropyl, 8-n-propylidene-9-butyl, 8-isopropylidene, 8-isopropylidene-9-methyl, 8-isopropylidene-9-ethyl, 8-isopropylidene-9-isopropyl, 8-isopropylidene-9-butyl, 8-chloro, 8-bromo, 8-fluoro, 8,9-dichloro, 8-phenyl, 8-methyl-8-phenyl, 8-benzyl, 8-tolyl, 8-(ethylphenyl), 8-(isopropylphenyl), 8,9-diphenyl, 8-(biphenyl), 8-(β-naphthyl), 8-(α-naphthyl), 8-(anthracenyl) and 5,6-diphenyl.

Also employable are:

an addition product of cyclopentadiene/acenaphthylene adduct with cyclopentadiene:
pentacyclo[6.5.1.$1^{3,6}$.$0^{2,7}$.$0^{9,13}$]-4-pentadecene and derivatives thereof;
pentacyclo[7.4.0.$1^{2,5}$.$1^{9,12}$.$0^{8,13}$]-3-pentadecene and derivatives thereof;
cyclopentadecadiene compounds such as pentacyclo[6.5.1.$1^{3,6}$.$0^{2,7}$.$0^{9,13}$]-4,10-pentadecadiene;
pentacyclo[8.4.0.$1^{2,5}$.$1^{9,12}$.$0^{8,13}$]-3-hexadecene and derivatives thereof;
pentacyclo[6.6.1.$1^{3,6}$.$0^{2,7}$.$0^{9,14}$]-4-hexadecene and derivatives thereof;
hexacyclo[6.6.1.$1^{3,6}$.$1^{10,13}$.$0^{2,7}$.$0^{9,14}$]-4-heptadecene and derivatives thereof;
heptacyclo[8.7.0.$1^{2,9}$.$1^{4,7}$.$1^{11,17}$.$0^{3,8}$.$0^{12,16}$]-5-eicosene and derivatives thereof;
heptacyclo[8.7.0.$1^{3,6}$.$1^{10,17}$.$1^{12,15}$.$0^{2,7}$.$0^{11,16}$]-4-eicosene and derivatives thereof;
heptacyclo[8.8.0.$1^{2,9}$.$1^{4,7}$.$1^{11,18}$.$0^{3,8}$.$0^{12,17}$]-5-heneicosene and derivatives thereof;
octacyclo[8.8.0.$1^{2,9}$.$1^{4,7}$.$1^{11,18}$.$1^{13,16}$.$0^{3,8}$.$0^{12,17}$]-5-docosene and derivatives thereof;
nonacyclo[10.9.1.$1^{4,7}$.$1^{13,20}$.$1^{15,18}$.$0^{2,10}$.$0^{3,8}$.$0^{12,21}$.$0^{14,19}$]-5-pentacosene and derivatives thereof; and
nonacyclo[10.10.1.$1^{5,8}$.$1^{14,21}$.$1^{16,19}$.$0^{2,11}$.$0^{4,9}$.$0^{19,22}$.$0^{15,20}$]-6-hexacosene and derivatives thereof.

Although examples of the cycloolefins represented by the above formula (I) or (II) employable in the present invention are described above, more specific structures of these compounds are shown in the specification in Paragraphs [0032] ~ [0054] of Japanese Patent Application No. 196475/1993.

The cycloolefins represented by the formula (I) or (II) can be prepared by subjecting cyclopentadienes and olefins of the corresponding structures to Diels-Alder reaction.

These cycloolefins may be used singly or in combination of two or more kinds.

The cycloolefin resin for use in the invention can be prepared using the cycloolefin represented by the formula (I) or (II) in accordance with, for example, the processes proposed by the present applicant in Japanese Patent Laid-Open Publications No. 168708/1985, No. 120816/1986, No 115912/1986, No. 115916/1986, No. 271308/1986, No. 272216/1986, No. 252406/1987 and No. 252407/1987, under the conditions properly selected.

Examples of the cycloolefin resins obtained from the cycloolefins mentioned above and employable in the invention include:

(i) a random copolymer of ethylene and a cycloolefin,
(ii) a ring-opening polymer or copolymer of a cycloolefin,
(iii) a hydrogenation product of the ring-opening polymer or copolymer, and
(iv) a graft modification product of the random copolymer (i), the ring-opening (co)polymer (ii) or the hydrogenation product (iii).

The ethylene/cycloolefin random copolymer (i) desirably contains units derived from ethylene in amounts of usually 52 to 90 % by mol, preferably 55 to 80 % by mol, and contains units derived from the cycloolefin in amounts of usually 10 to 48 % by mol, preferably 20 to 45 % by mol. The ethylene unit content and the cycloolefin unit content in the copolymer can be measured by $^{13}C$-NMR.

In the ethylene/cycloolefin random copolymer (i), the units derived from ethylene and the units derived from the cycloolefin are arranged at random and bonded to each other. This copolymer (i) has a substantially linear structure. The substantially linear and substantially gel-free structure of this copolymer can be confirmed by the fact that when the copolymer is dissolved in an organic solvent, no insoluble component is contained in the copolymer. For example, the structure can be confirmed by the fact that the copolymer is completely dissolved in decalin at 135 °C.

In the ethylene/cycloolefin random copolymer, at least a part of the cycloolefin represented by the formula (I) or (II) is presumed to form recurring units represented by the following formula (III) or (IV).

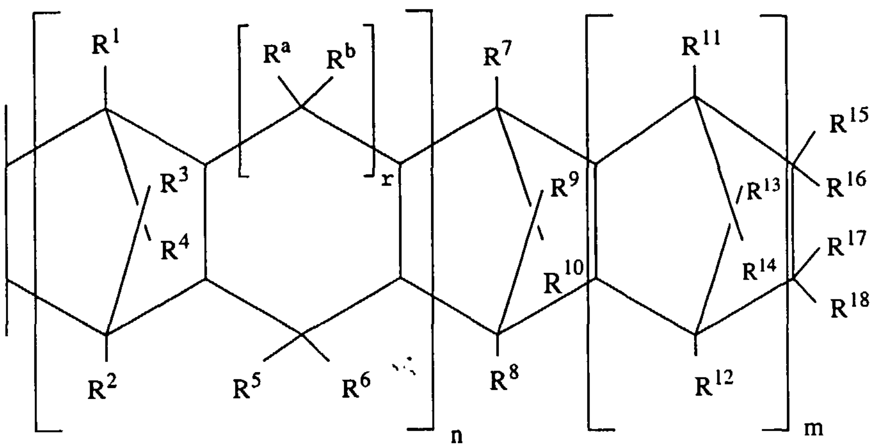

(III)

wherein m, n, r, $R^1$ to $R^{18}$, $R^a$ and $R^b$ have the same meanings as defined in formula (I).

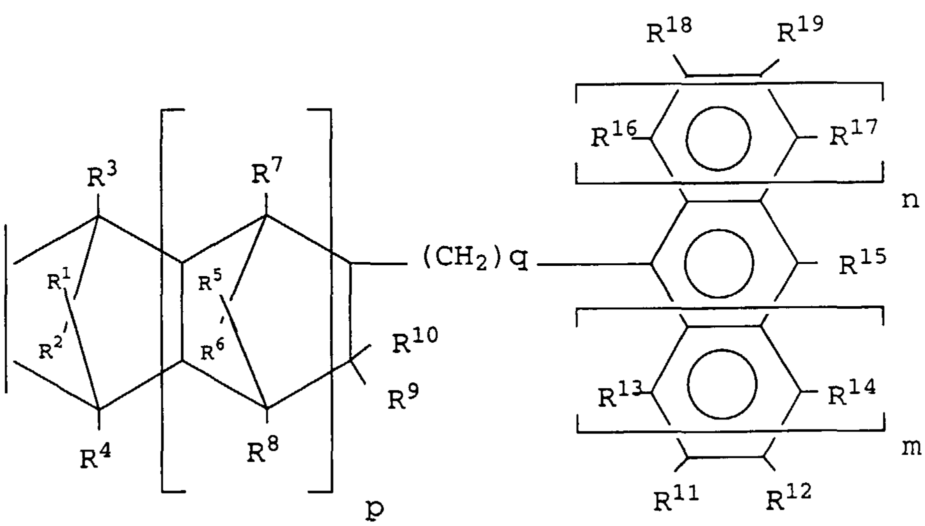

(IV)

wherein m, n, p, q and $R^1$ to $R^{19}$ have the same meanings as defined in formula (II).

The ethylene/cycloolefin random copolymer may contain units derived from copolymerizable other monomers, with the proviso that the properties of the resulting copolymer are not marred.

Examples of the other monomers than the ethylene and the cycloolefin include:

α-olefins of 3 to 20 carbon atoms, such as propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene and 1-eicosene;

cycloolefins, such as cyclobutene, cyclopentene, cyclohexene, 3,4-dimethylcyclopentene, 3-methylcyclohexene, 2-(2-methylbutyl)-1-cyclohexene, cyclooctene and 3a,5,6,7a-tetrahydro-4,7-methano-1H-indene;

norbornenes, such as 2-norbornene, 5-methyl-2-norbornene, 5-ethyl-2-norbornene, 5-isopropyl-2-norbornene, 5-n-butyl-2-norbornene, 5-isobutyl-2-norbornene, 5,6-dimethyl-2-norbornene, 5-chloro-2-norbornene and 5-fluoro-2-norbornene; and

non-conjugated dienes, such as 1,4-hexadiene, 4-methyl-1,4-hexadiene, 5-methyl-1,4-hexadiene, 1,7-octadiene, dicyclopentadiene, 5-ethylidene-2-norbornene and 5-vinyl-2-norbornene.

The ethylene/cycloolefin random copolymer (i) may contain the units derived from the above-described other monomers in an amount of usually 20 mol % or less, preferably 10 mol % or less, and also may contain two or more kinds of units derived from such monomers.

The ethylene/cycloolefin random copolymer (i) can be prepared by the processes disclosed in the above publications using ethylene and the cycloolefin represented by the formula (I) or (II). Of those process, preferable is a process wherein copolymerization of ethylene and the cycloolefin is conducted in a hydrocarbon solvent using a catalyst formed from a vanadium compound soluble in the hydrocarbon solvent and an organoaluminum compound to prepare an ethylene/cycloolefin random copolymer.

In the copolymerization reaction, a solid Group IVB metallocene catalyst may be employed. The solid Group IVB metallocene catalyst is a catalyst formed from a transition metal compound containing a ligand having a cyclopentadienyl skeleton, an organoaluminum oxy-compound, and if necessary, an organoaluminum compound. The Group IVB transition metal is zirconium, titanium or hafnium, and these transition metals have at least one ligand containing a cyclopentadienyl skeleton. Examples of the ligands containing a cyclopentadienyl skeleton include a cyclopentadienyl group, an indenyl group, a tetrahydroindenyl group and a fluorenyl group, each of which may be substituted with an alkyl group. These groups may be attached through other groups such as an alkylene group. Examples of ligands other than the ligands containing a cyclopentadienyl skeleton include an alkyl group, a cycloalkyl group, an aryl group and an aralkyl group.

As the organoaluminum oxy-compound and the organoaluminum compound, those commonly used for preparing olefin resins are employable. The solid IVB metallocene catalyst is described in, for example, Japanese Patent Laid-Open Publications No. 221206/1986, No. 106/1989 and No. 173112/1989.

In the ring-opening (co)polymer, at least a part of the cycloolefin represented by formula (I) or (II) is presumed to form recurring units represented by the following formula (V) or (VI):

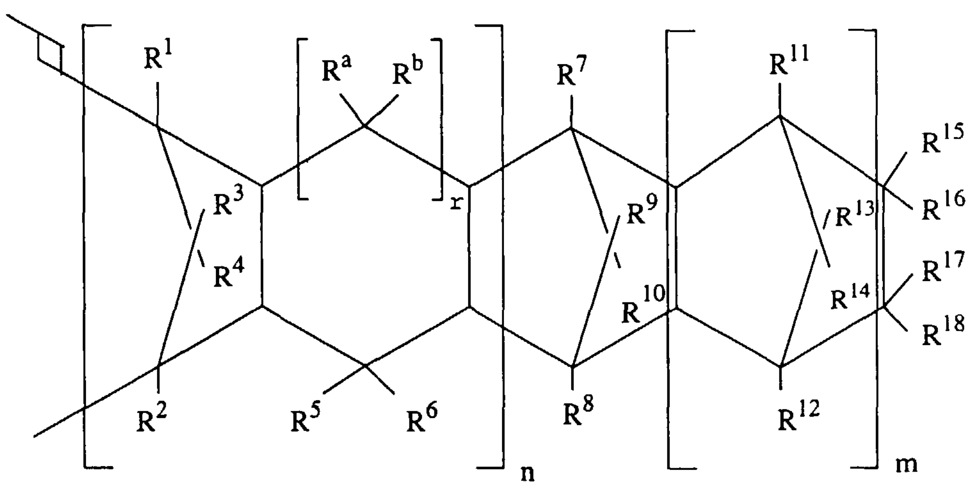

(V)

wherein m, n, r, $R^1$ to $R^{18}$, $R^a$ and $R^b$ have the same meanings as defined in formula (I), or

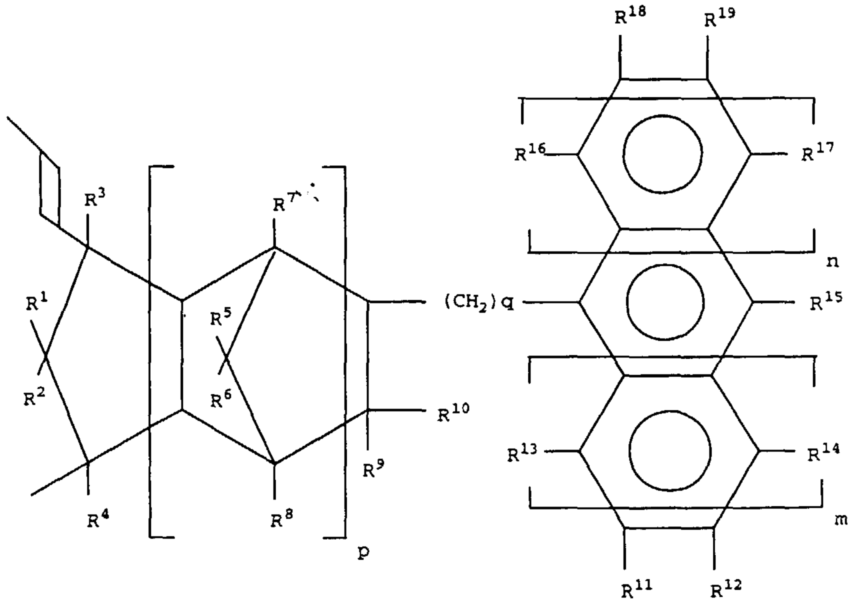

(VI)

wherein m, n, p, q and $R^1$ to $R^{19}$ have the same meanings as defined in formula (II).

The ring-opening (co)polymer (ii) can be prepared by the methods as disclosed in the above Japanese Patent Laid-Open Publications, namely, it can be prepared by (co)polymerizing the cycloolefin represented by, for example, formula (I) in the presence of a ring-opening polymerization catalyst.

Examples of the ring-opening polymerization catalyst used in the present invention include:

a catalyst comprising a halogenated compound, nitrate or an acetylacetone compound with a metal(s), such as ruthenium, rhodium, palladium, osmium, indium or platinum, and a reducing agent, or
a catalyst comprising a halogenated compound or an acetylacetone compound with a metal(s) such as titanium, palladium, zirconium or molybdenium, and an organoaluminum compound.

The hydrogenation product of the ring-opening (co)polymer (iii) can be prepared by hydrogenating the above-mentioned ring-opening (co)polymer (ii) in the presence of the known hydrogenation catalyst.

In the hydrogenation product (iii), at least a part of the cycloolefin represented by the formula (I) or (II) is presumed to form recurring units represented by the following formula (VII) or (VIII):

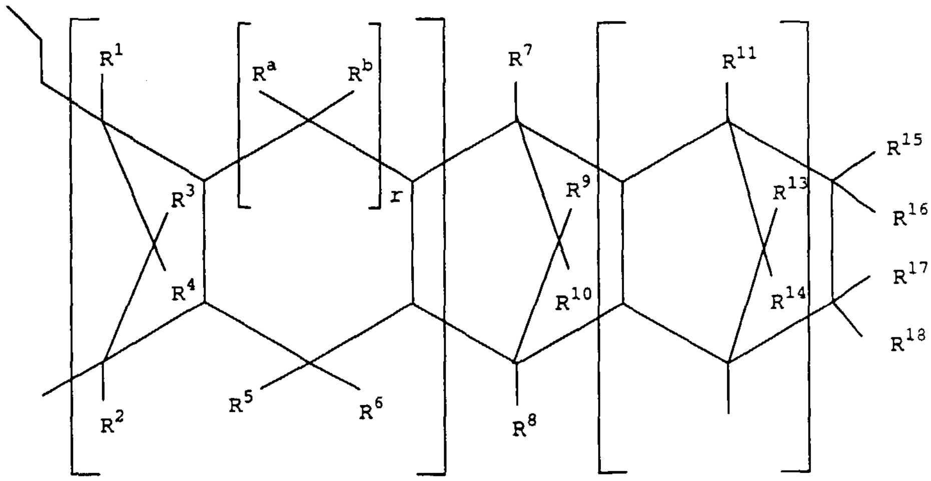

(VII)

wherein m, n, r, $R^1$ to $R^{18}$, $R^a$ and $R^b$ have the same meanings as defined in formula (I), or

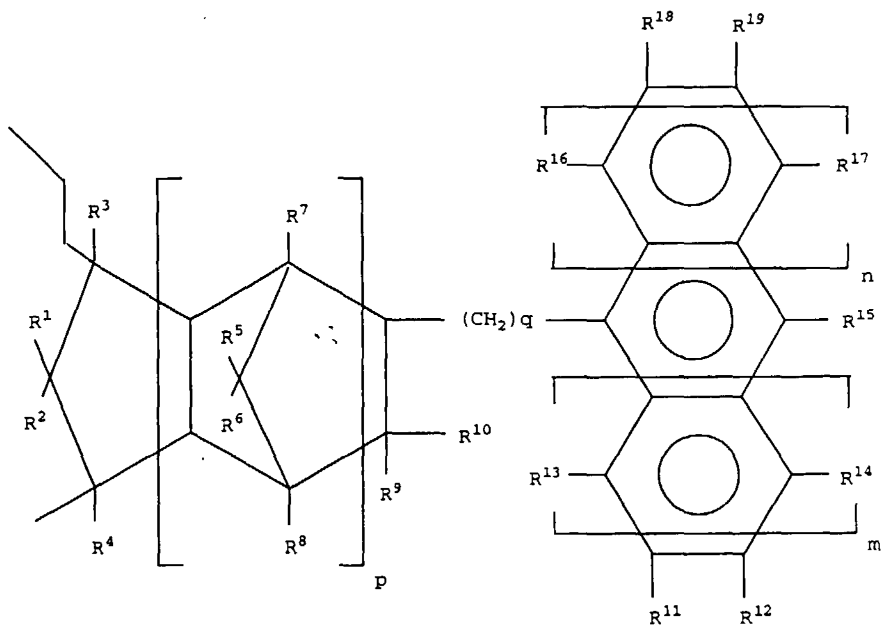

(VIII)

wherein m, n, p, q, and $R^1$ to $R^{19}$ have the same meanings as defined in formula (II).

The graft modification product (iv) of a cycloolefin resin is a graft modification product of (i) the ethylene/cycloolefin random copolymer, (ii) the ring-opening polymer or copolymer of a cycloolefin, or (iii) the hydrogenation product of the ring-opening (co)polymer.

The modifier generally used is an unsaturated carboxylic acid or its derivative. Examples of the unsaturated carboxylic acids include (meth)acrylic acid, maleic acid, fumaric acid, tetrahydrophthalic acid, itaconic acid, citraconic acid, crotonic acid, isocrotonic acid and endocis-bicyclo[2,2,1]hept-5-ene-2,3-dicarboxylic acid (Nadic acid™). Examples of the derivatives of the unsaturated carboxylic acids include unsaturated carboxylic anhydrides, unsaturated carboxylic acid halides, unsaturated carboxylic acid amides, unsaturated carboxylic acid imides and unsaturated carboxylic esters.

Particular examples of the derivatives of the unsaturated carboxylic acids include maleic anhydride, citraconic anhydride, malenyl chloride, maleimide, monomethyl maleate, dimethyl maleate and glycidyl maleate.

Of the above modifiers, preferably used are α,β-unsaturated dicarboxylic acids and α,β-unsaturated carboxylic acid anhydrides, for example, maleic acid, Nadic acid™ and anhydrides thereof. The modifiers can be used in combination of two or more kinds.

In the graft modification product of a cycloolefin resin for use in the invention, the degree of modification is desired to be usually not more than 10 % by mol.

The graft modification product of a cycloolefin resin can be prepared by adding the modifier to the cycloolefin resin so as to obtain a desired degree of modification and performing graft polymerization, or it can be prepared by initially preparing a modification product having a high degree of modification and then mixing the modification product with an unmodified cycloolefin resin.

To obtain the graft modified product of a cycloolefin resin from the cycloolefin resin and the modifier, hitherto known methods to modify polymers can be widely adopted. For example, a modifier is added to a molten cycloolefin resin to perform graft reaction (polymerization), whereby the graft modifiecation product is obtained, or a modifier is added to a solvent solution of a cycloolefin resin to perform graft reaction, whereby the graft modification product is obtained.

The graft reaction is carried out at a temperature of usually 60 to 350 °C.

The graft reaction can be conducted in the presence of a radical initiator such as an organic peroxide or an azo compound.

The modification product having the above-mentioned degree of modification can be directly obtained by the graft reaction between the cycloolefin resin and the modifier, or it can be obtained by initially preparing a modification product having a high degree of modification by the graft reaction between the cycloolefin and the modifier and then diluting the modified product with an unmodified cycloolefin resin so as to obtain a desired degree of modification.

In the present invention, any of the resins (i), (ii) (iii) and (iv) may be used as the cycloolefin resin, or any optional combination thereof may be used.

Of these, the ethylene/α-olefin random copolymer (i) is particularly preferably employed.

The cycloolefin resin for use in the invention desirably has a melt flow rate (MFR, measured at 260 °C under a load of 2.16 kg in accordance with the method of ASTM D 1238) of 0.01 to 100 g/10 min.

(B-1) Polypropylene

The layer (B) of the polyolefin laminate according to the invention is formed from a composition comprising the polypropylene (B-1) and the ethylene/α-olefin copolymer (B-2).

The polypropylene (B-1) for use in the invention may be a homopolymer of propylene or a copolymer of propylene and another α-olefin.

Examples of the α-olefins other than propylene include ethylene, 1-butene, 1-pentene, 2-methyl-1-butene, 3-methyl-1-butene, 1-hexene, 3-methyl-1-pentene, 4-methyl-1-pentene, 3,3-dimethyl-1-butene, 1-heptene, methyl-1-hexene, diemthyl-1-pentene, trimethyl-1-butene, ethyl-1-pentene, 1-octene, methyl-1-pentene, dimethyl-1-hexene, trimethyl-1-pentene, ethyl-1-hexene, methylethyl-1-pentene, diethyl-1-butene, propyl-1-pentene, 1-decene, methyl-1-nonene, dimethyloctene, trimethyl-1-heptene, ethyl-1-octene, methylethyl-1-heptene, diethyl-1-hexene, 1-dodecene and hexadodecene.

The copolymer of propylene and the above α-olefin may be a random copolymer or a block copolymer.

In the present invention, a propylene homopolymer or a propylene/ethylene random copolymer having an ethylene content of not more than 5 % by mol is preferably employed as the polypropylene (B-1).

The polypropylene desirably has a melt flow rate (MFR, measured at 230 °C under a load of 2.16 kg in accordance with the method of ASTM D 1238) of 0.1 to 50 g/10 min, preferably 1 to 30 g/10 min.

The polypropylene desirably has a density of 0.89 to 0.91 g/$cm^3$.

The polypropylene (B-1) can be prepared by the use of a known catalyst such as a Ziegler type titanium catalyst or a metallocene catalyst.

The polypropylene mentioned above can be used in combination of two or more kinds.

(B-2) Ethylene/α-olefin copolymer

The polypropylene composition for use in the invention comprises the polypropylene (B-1) and the ethylene/α-olefin copolymer (B-2).

In the present invention, a copolymer obtained by polymerizing ethylene and an α-olefin of 3 to 20 carbon atoms using a metallocene catalyst is employed as the ethylene/α-olefin copolymer (B-2).

Examples of the α-olefins of 3 to 20 carbon atoms include propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. These α-olefins can be used in combination.

The ethylene/α-olefin copolymer (B-2) can be prepared by polymerizing ethylene and such an α-olefin of 3 to 20 carbon atoms as mentioned above in accordance with a known polymerization process using a metallocene catalyst.

The metallocene catalyst is a catalyst comprising a metallocene compound (I), and this metallocene catalyst preferably consists of (I) a metallocene compound, (II) a fine particle carrier, (III-a) an organoaluminum oxy-compound and/or (III-b) a component which reacts with the metallocene compound to form an ionic complex, and if necessary, (III-c) an organoaluminum compound.

The metallocene compound (I) preferably used in the invention is represented by the following formula (1):

$$ML_x \qquad (1)$$

wherein M is a transition metal selected from the Group IVB of the periodic table, specifically zirconium, titanium or hafnium, preferably zirconium, and x is a valence of the transition metal atom M.

L is a ligand coordinated to the transition metal atom, and at least two of L are each a group having a cyclopentadienyl skeleton.

Examples of the groups having a cyclopentadienyl skeleton include a cyclopentadienyl group, indenyl group, 4,5,6,7-tetrahydroindenyl group and fluorenyl group.

These groups may have a substituent, and example of the substituents include alkyl groups, such as methyl, ethyl, butyl and hexyl; alkoxy groups, such as methoxy; halogen atoms; and trialkylsilyl groups. The group having a cyclopentadienyl skeleton may have two ore more substituents, and the plural substituents may be different from each other.

The groups having a cyclopentadienyl skeleton, which are coordinated to the transition metal atom M, may be the same or different.

Of the above groups, preferable is an alkyl-substituted cyclopentadienyl group.

The ligand other than the above is a hydrocarbon group of 1 to 12 carbon atoms, an alkoxy group, an aryloxy group, a trialkylsilyl group, a triarylsilyl group, a halogen atom or a hydrogen atom.

Example of the hydrocarbon groups of 1 to 12 carbon atoms include alkyl groups, cycloalkyl groups, aryl groups and aralkyl groups. Specifically, there can be mentioned alkyl groups, such as methyl, ethyl, n-propyl, iso-propyl, n-butyl, iso-butyl, sec-butyl, tert-butyl, n-pentyl, neopentyl, n-hexyl, octyl, 2-ethylhexyl and decyl; cycloalkyl groups, such as cyclopentyl and cyclohexyl; aryl groups, such as phenyl and tolyl; and aralkyl groups, such as benzyl and neophyl.

Examples of the alkoxy groups include methoxy, ethoxy, n-propoxy, iso-propoxy, n-butoxy, iso-butoxy, sec-butoxy, tert-butoxy, pentoxy, hexoxy and octoxy.

Examples of the aryloxy groups include phenoxy.

Examples of the trialkylsilyl groups include trimethylsilyl and triethylsilyl, and examples of the triarylsilyl groups include triphenylsilyl.

The halogen atom is fluorine, chlorine, bromine or iodine.

Listed below are examples of the metallocene compounds represented by the formula (1).

Bis(cyclopentadienyl)zirconiumdichloride,
Bis(methylcyclopentadienyl)zirconiumdichloride,
Bis(ethylcyclopentadienyl)zirconiumdichloride,
Bis(n-propylcyclopentadienyl)zirconiumdichloride,
Bis(n-butylcyclopentadienyl)zirconiumdichloride,
Bis(n-hexylcyclopentadienyl)zirconiumdichloride,
Bis(methyl-n-propylcyclopentadienyl)zirconiumdichloride,
Bis(methyl-n-butylcyclopentadienyl)zirconiumdichloride,
Bis(dimethylcyclopentadienyl)zirconiumdichloride,
Bis(dimethyl-n-butylcyclopentadienyl)zirconiumdichloride,
Bis(n-butylcyclopentadienyl)zirconiumdibromide,
Bis(n-butylcyclopentadienyl)zirconiummethoxychloride,
Bis(n-butylcyclopentadienyl)zirconiumethoxychloride,
Bis(n-butylcyclopentadienyl)zirconiumbutoxychloride,
Bis(n-butylcyclopentadienyl)zirconiumethoxyide,
Bis(n-butylcyclopentadienyl)zirconiummethylchloride,
Bis(n-butylcyclopentadienyl)zirconiumdimethyl,

Bis(n-butylcyclopentadienyl)zirconiumbenzylchloride,
Bis(n-butylcyclopentadienyl)zirconiumdibenzyl,
Bis(n-butylcyclopentadienyl)zirconiumphenylchloride,
Bis(n-butylcyclopentadienyl)zirconiumhyderidechloride,
Bis(indenyl)zirconiumdichloride,
Bis(indenyl)zirconiumdibromide,
Bis(4,5,6,7-tetrahydroindenyl)zirconiumdichloride,
Bis(fluorenyl)zirconiumdichloride and the like.

In the above examples, the di-substituted cyclopentadienyl groups include 1,2-substituted and 1,3-substituted cyclopentadienyl groups, and the tri-substituted cyclopentadienyl groups include 1,2,3-substituted and 1,2,4-substituted cyclopentadienyl groups.

Examples of the metallocene compounds containing zirconium as M are given above, but metallocene compounds wherein zirconium is replaced with titanium or hafnium in the above compounds are also available.

Among these preferable compounds are

Bis(n-propylcyclopentadienyl)zirconiumdichloride,
Bis(n-butylcyclopentadienyl)zirconiumdichloride,
Bis(1-methyl-3-n-propylcyclopentadienyl)zirconiumdichloride,
Bis(1-methyl-3-n-butylcyclopentadienyl)zirconiumdichloride,
Bis(1,3-dimethylcyclopentadienyl)zirconiumdichloride,
Bis(1,3-di-n-butylcyclopentadienyl)zirconiumdichloride and the like.

The compound represented by the formula (1) may have a crosslinked structure wherein two ligands L having a cyclopentadienyl skeleton are linked through a lower alkylene group such as ethylene or propylene, a substituted alkylene group such as isopropylidene or diphenylmethylene, a silylene group, or a substituted silylene group such as dimethylsilylene, diphenylsilylene or methylphenylsilylene.

Examples of the methallocene compounds include

Ethylenebis(indenyl)dimethylzirconium,
Ethylenebis(indenyl)diethylzirconium,
Ethylenebis(indenyl)diphenylzirconium,
Ethylenebis(indenyl)methylzirconiummonochloride,
Ethylenebis(indenyl)ethylzirconiummonochloride,
Ethylenebis(indenyl)methylzirconiummonobromide,
Ethylenebis(indenyl)zirconiumdichloride,
Ethylenebis(indenyl)zirconiumdibromide,
Ethylenebis(4,5,6,7-tetrahydro-1-indenyl)dimethylzirconium,
Ethylenebis(4,5,6,7-tetrahydro-1-indenyl)methylzirconiumchloride,
Ethylenebis(4,5,6,7-tetrahydro-1-indenyl)zirconiumdichloride,
Ethylenebis(4,5,6,7-tetrahydro-1-indenyl)zirconiumdibromide,
Ethylenebis(4-methyl-1-indenyl)zirconiumdichloride,
Ethylenebis(5-methyl-1-indenyl)zirconiumdichloride,
Ethylenebis(6-methyl-1-indenyl)zirconiumdichloride,
Ethylenebis(7-methyl-1-indenyl)zirconiumdichloride,
Ethylenebis(5-methoxy-1-indenyl)zirconiumdichloride,
Ethylenebis(2,3-dimethyl-1-indenyl)zirconiumdichloride,
Ethylenebis(4,7-dimethyl-1-indenyl)zirconiumdichloride,
Ethylenebis(4,7-dimethoxy-1-indenyl)zirconiumdichloride,
Isopropylidene(cyclopentadienylmethylcyclopentadienyl)zirconiumdichloride,
Isopropylidene (cyclopentadienylfluorenyl)zirconiumdichloride,
Isopropylidene(cyclopentadienyl-2,7-di-t-fluorenyl)zirconiumdichloride,
Dimethylsylylenebis(cyclopentadienyl)zirconiumdichoride,
Dimethylsylylenebis(methylcyclopentadienyl)zirconiumdichloride,
Dimethylsylylenebis(dimethylcyclopentadienyl)zirconiumdichloride,
Diemthylsylylenebis(trimethylcyclopentadienyl)zirconiumdichloride,
Dimethylsylylenebis(indenyl)zirconiumdichloride,
Diphenylsylylenebis(indenyl)zirconiumdichloride and the like.

In the above examples, the di-substituted cyclopentadienyl groups may be 1,2-substituted cyclopentadienyl groups or 1,3-substituted cyclopentadienyl groups. Also available are metallocene compounds wherein zirconium is replaced with titanium or hafnium in the above-exemplified zirconium compounds. Of the above compounds, preferable are ethylenebis(indenyl)zirconium dichloride, dimethylsilylenebis(indenyl)zirconium dichloride and diphenylsilylenebis(2-methylindenyl)zirconium dichloride.

The metallocene compound (I) is generally used together with a fine particle carrier (II). The fine particle carrier (II) used herein is a granular or particulate solid having a diameter of usually 10 to 300 μm, preferably 20 to 200 μm.

The carrier is preferably a porous inorganic oxide, and examples thereof include $SiO_2$, $Al_2O_3$, MgO, $ZrO_2$, $TiO_2$, $B_2O_3$, CaO, ZnO, BaO, $ThO_2$, and mixtures thereof, such as $SiO_2$-MgO, $SiO_2$-$Al_2O_3$, $SiO_2$-$TiO_2$, $SiO_2$-$V_2O_5$, $SiO_2$-$Cr_2O_3$ and $SiO_2$-$TiO_2$-MgO. Of these, preferable are $SiO_2$ and/or $Al_2O_3$ as main ingredients.

The inorganic oxides may contain small amounts of carbonates, sulfates, nitrates and oxides, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$ and $Li_2O$.

The carrier desirably has a specific surface area of 50 to 1,000 $m^2/g$, preferably 100 to 700 $m^2/g$, and has a pore volume of 0.3 to 2.5 $cm^3/g$.

The inorganic carrier can be used after calcined at a temperature of 100 to 1,000 °C, preferably 150 to 700 °C, if desired.

In the present invention, an organic compound can be used as the fine particle carrier (II). For example, (co)polymers produced mainly from α-olefins of 2 to 14 carbon atoms such as ethylene, propylene, 1-butene and 4-methyl-1-pentene and (co)polymers produced mainly from vinylcyclohexane or styrene are employable.

The organoaluminum oxy-compound (III-a) used for preparing the metallocene catalyst in the invention is, for example, an aluminoxane. Specifically, methylaluminoxane, ethylaluminoxane or methylethylaluminoxane each of which has about 3 to 50 recurring units represented by the formula -Al(R)O- (R is a hydrocarbon group) is employable.

The aluminoxane can be prepared by a process hitherto known, and can be prepared by the reaction of at least one organoaluminum compound such as trialkylaluminum with water. Specifically, the following processes are available.

(1) An organoaluminum compound such as trialkylaluminum is added to a hydrocarbon medium suspension of a compound containing adsorbed water or a salt containing water of crystallization, e.g., magnesium chloride hydrate, copper sulfate hydrate, aluminum sulfate hydrate, nickel sulfate hydrate or cerous chloride hydrate, so as to allow the organoaluminum compound to react with the adsorbed water or the water of crystallization.

(2) Water, ice or water vapor is allowed to directly act on an organoaluminum compound such as trialkylaluminum in a medium such as benzene, toluene, ethyl ether or tetrahydrofuran.

(3) An organotin oxide such as dimethyltin oxide or dibutyltin oxide is allowed to react with an organoaluminum compound such as trialkylaluminum in a medium such as decane, benzene or toluene.

Of the above processes, the process (1) is preferable.

The aluminoxane may contain a small amount of an organometallic component. It is possible that the solvent or the unreacted organoaluminum compound is distilled off from the recovered solution of aluminoxane and the remainder is redissolved in a solvent.

The organoaluminum oxy-compound (III-a) may be a benzene-soluble aluminoxane hitherto known or may be such a benzene-insoluble organoaluminum oxy-compound as disclosed in Japanese Patent Laid-Open Publication No. 276807/1990.

Examples of the organoaluminum compounds used for preparing the aluminoxane include trialkylaluminums, such as trimethylaluminum, triethylaluminum, tri (n-, i-)propylaluminum, tri(n-, i-, sec-, t-)butylaluminum, tripentylaluminum, trihexylaluminum, trioctylaluminum, tri-2-ethylhexylaluminum and tridecylaluminum; tricycloalkylaluminums, such as tricycloaluminum and tricyclooctylaluminum; and dialkylaluminum halides, such as dimethylaluminum chloride, diethylaluminum chloride, diisopropylaluminum chloride, diisobutylaluminum chloride and diethylaluminum bromide; dialkylaluminum hydrides, such as diethylaluminum hydride and diisobutylaluminum hydride; dialkylaluminum alkoxides, such as dimethylaluminum methoxide and diethylaluminum methoxide; and dialkylaluminum aryloxides, such as diethylaluminum phenoxide.

Of these, preferably used are trialkylaluminums and tricycloalkylaluminums.

The component (III-b) which reacts with the metallocene compound to form an ionic complex is, for example, Lewis acid, an ionic compound or a carborane compound, each being described in U.S. Patent No. 5,321,106.

Examples of the Lewis acid include triphenylboron, tris(4-fluorophenyl)boron, tris(p-tolyl)boron, tris(o-tolyl)boron, tris(3,5-dimethylphenyl)boron, tris(pentafluorophenyl)boron, $MgCl_2$, $Al_2O_3$ and $SiO_2$-$Al_2O_3$.

Examples of the ionic compounds include triphenylcarbeniumtetrakis(pentafluorophenyl)borate, tri-n-butylammoniumtetrakis(pentafluorophenyl)borate, N,N-dimethylaniliniumtetrakis(pentafluorophenyl)borate and ferroceniumtetra(pentafluorophenyl)borate.

Examples of the carborane compounds include dodecaborane, 1-carbaundecaborane, bis-n-butylammonium(1-carbedodeca)borate, tri-n-butylammonium(7,8-dicarbaundeca)borate and tri-n-butylammonium(tridecahydrido-7-carbaundeca)borate.

Examples of the organoaluminum compounds (III-c) optionally used for forming the metallocene catalyst include:

trialkylaluminums, such as trimethylaluminum, triethylaluminum, triisopropylaluminum, triisobutylaluminum, trioctylaluminum and tri-2-ethylhexylaluminum;
alkenylaluminums, such as isoprenylaluminum;
dialkylaluminum halides, such as dimethylaluminum chloride, diethylaluminum chloride, diisopropylaluminum chloride, diisobutylaluminum chloride and dimethylaluminum bromide;
alkylaluminum sesquihalides, such as methylaluminum sesquichloride, ethylaluminum sesquichloride, isopropylaluminum sesquichloride, butylaluminum sesquichloride and ethylaluminum sesquibromide;
alkylaluminum dihalides, such as methylaluminum dichloride, ethylaluminum dichloride, isopropylaluminum dichloride and ethylaluminum dibromide; and
alkylaluminum hydrides, such as diethylaluminum hydride and diisobutylaluminum hydride.

In the preparation of the metallocene catalyst from the metallocene compound (I), the fine particle carrier (II), the organoaluminum oxy-compound (III-a) or the component (III-b) which reacts with the metallocene compound to form an ionic complex, and if necessary, the organoaluminum compound (III-c), these components may be each used in combination of two or more kinds. The organoaluminum oxy-compound (III-a) and the component (III-b) which reacts with the metallocene compound to form an ionic complex may be used in combination.

In the preparation of the metallocene catalyst from the above components, the components may be contacted in any order, but it is preferable that the carrier (II) is contacted with the organoaluminum oxy-compound (III-a) and/or the component (III-b) prior to the polymerization and the resulting contact product is then contacted with the metallocene compound (I) to prepare a solid catalyst.

The contact of these components is carried out at a temperature of usually -50 to 150 °C, preferably -20 to 120 °C, for a period of usually 1 minute to 50 hours, preferably 10 minutes to 25 hours.

In the contact of the components, an inert hydrocarbon solvent can be employed. For example, it is preferable that the fine particle carrier (II), the metallocene compound (I), and the organoaluminum oxy compound (III-a) and/or the component (III-b) are contacted in an inert hydrocarbon solvent. Examples of the inert hydrocarbon solvents include aliphatic hydrocarbons, such as propane, butane, pentane, hexane, heptane, octane and decane; alicyclic hydrocarbons, such as cyclopentane, cyclohexane and methylcyclopentane; aromatic hydrocarbons, such as benzene, toluene and xylene; halogenated hydrocarbons, such as ethylene chloride, chlorobenzene and dichloroethane; and petroleum fractions, such as kerosine and gas oil.

In the preparation of the catalyst from the above components, the metallocene compound (I) is used in an amount of usually $5 \times 10^{-6}$ to $5 \times 10^{-4}$ mol, preferably $10^{-5}$ to $2 \times 10^{-4}$ mol, based on 1 g of the carrier (II).

The organoaluminum oxy-compound (III-a) is used in such an amount that the atomic ratio of aluminum in the organoaluminum oxy-compound (III-a) to the transition metal in the metallocene compound (I) (Al/transition metal) becomes usually 10 to 500, preferably 20 to 200.

The component (III-b) which reacts with the metallocene compound to form an ionic complex is used in such an amount that the molar ratio of the metallocene compound (I) to the component (III-b) ((I)/(III-b)) becomes 0.01 to 10, preferably 0.1 to 5.

In the solid catalyst prepared as above, the metallocene compound (I) is desirably supported in an amount of $5 \times 10^{-6}$ to $5 \times 10^{-4}$ g • atom, preferably $10^{-5}$ to $2 \times 10^{-4}$ g • atom, in terms of the transition metal atom and based on 1 g of the carrier (II).

It is preferable that the organoaluminum compound (III-c) is optionally used together with the solid catalyst obtained above.

When the organoaluminum compound (III-c) is used, this compound is desirably used in such an amount that the atomic ratio of aluminum in the organoaluminum compound (III-c) to aluminum in the organoaluminum oxy-compound (III-a) (Al-(III-c)/Al-(III-a)) becomes 0.02 to 3, preferably 0.05 to 1.5.

In the present invention, olefins may be prepolymerized onto the solid catalyst. The prepolymerization can be carried out by a known process. As the monomers used in the prepolymerization, the same monomers as used in the polymerization, such as ethylene and $\alpha$-olefins of 3 to 20 carbon atoms, are preferable.

The ethylene/$\alpha$-olefin copolymer (B-2) prepared by the use of the above-described metallocene catalyst desirably contains units derived from ethylene in amounts of 55 to 99 % by mol, preferably 70 to 95 % by mol, and contains units derived from the $\alpha$-olefin in amounts of 1 to 45 % by mol, preferably 5 to 30 % by mol.

The polypropylene composition containing the ethylene/$\alpha$-olefin copolymer (B-2) prepared by the use of the

metallocene catalyst shows extremely higher adhesion strength to the cycloolefin resin than that of a polypropylene composition containing an ethylene/α-olefin copolymer prepared by the use of, for example, a Ziegler type titanium catalyst, and hence laminates having prominently excellent interlaminar strength can be obtained using the composition.

The ethylene/α-olefin copolymer (B-2) for use in the invention desirably has a density of less than 0.930 g/cm$^3$, preferably less than 0.920 g/cm$^3$.

The density of the ethylene/α-olefin copolymer can be determined by a method comprising heat-treating strands, that is obtained in the measurement of a melt flow rate, at 120 °C for 1 hour, then slowly cooling them to room temperature over a period of 1 hour and measuring a density by a density gradient tube.

The polypropylene composition containing the ethylene/α-olefin copolymer (B-2) having such a density has excellent transparency, and therefore, a laminate having excellent transparency can be obtained from the polypropylene composition and the cycloolefin resin. Laminates formed from a polypropylene composition containing polyethylene having a density of not less than 0.930 g/cm$^3$ and a cycloolefin resin occasionally show poor transparency.

It is desired that the melt flow rate (MFR) of the ethylene/α-olefin copolymer (B-2), as measured at 190 °C under a load of 2.16 kg in accordance with the method of ASTM D 1238, is in the range of 0.01 to 100 g/10 min, preferably 0.5 to 50 g/10 min.

It is also desired that the ratio of the weight-average molecular weight Mw to the number-average molecular weight Mn (Mw/Mn) (molecular weight distribution) of the ethylene/α-olefin copolymer (B-2), as measured by GPC, is in the range of 1.5 to 4.0, preferably 1.5 to 3.0.

<u>Polypropylene composition</u>

The polypropylene composition for use in the invention can be obtained by, for example, a process wherein the polypropylene (B-1) and the ethylene/α-olefin copolymer (B-2) are melt kneaded by a conventional kneading device such as an extruder or a Banbury mixer, a process wherein the components (B-1) and (B-2) are dissolved in a solvent common to the both components and then the solvent is evaporated, or a process wherein a solution of the components (B-1) and (B-2) is added to a poor solvent to perform precipitation.

The polypropylene composition for use in the invention comprises:

(B-1) the polypropylene in an amount of 50 to 99 % by weight, preferably 60 to 90 % by weight, and
(B-2) the ethylene/α-olefin copolymer in an amount of 1 to 50 % by weight, preferably 10 to 40 % by weight.

To the cycloolefin resin and/or the polypropylene composition mentioned above, various additives, such as dye, pigment, stabilizer, plasticizer, antistatic agent, ultraviolet light absorber, antioxidant, lubricant and filler, may be optionally added in amounts not detrimental to the objects of the present invention.

<u>Polyolefin laminate and uses thereof</u>

The polyolefin laminate according to the invention comprises at least one cycloolefin resin layer (A) and at least one polypropylene composition layer (B) laminated to each other.

To produce the laminate from the cycloolefin resin and the polypropylene composition, methods commonly known as those to produce multi-layer sheets or films of polymers can be adopted. For example, co-extrusion molding methods such as a multi-layer T-die method and a multi-layer inflation method can be adopted.

A laminate having excellent interlaminar strength can be produced by the co-extrusion molding method using the cycloolefin resin and the polypropylene composition mentioned above.

In the polyolefin laminate of the invention, laminating of the layers can be carried out in an arbitrary manner. Specifically, the outer surface layers may be the polypropylene composition layers (B) or the cycloolefin resin layers (A), or it is possible that one of the outer surface layers is the polypropylene composition layer (B) and the other of the outer surface layers is the cycloolefin resin layer (A). More specifically, the laminate of the invention may be a laminate of (A)/(B), a laminate of (B)/(A)/(B), a laminate of (A)/(B)/(A), or a laminate of repetition of any of these structures. Of these, preferable is a laminate wherein at least one of the outer surface layers is the polypropylene composition layer (B).

The polyolefin laminate may include a layer of another resin, such as a vinylidene chloride layer, a polyamide layer, an ethylene/vinyl alcohol copolymer layer, a polyester layer or a layer of polyolefin (e.g., polypropylene, polyethylene), within limits not prejudicial to the objects of the present invention.

There is no specific limitation on the thickness of each layer, but it is preferable that, in a press-through pack (PTP) or a blister pack, the thickness of the layer (A) is in the range of 100 to 300 μm. If the layer (A) has such thickness, satisfactory moisture resistance can be imparted to even PTP or blister packs requiring particularly high moisture resistance. The thickness of the layer (B) (single layer) is desirably in the range of about 10 to 50 μm. The thickness of the

whole polyolefin laminate is not specifically limited.

The polyolefin laminate of the invention is excellent in heat resistance, heat aging resistance, chemical resistance, solvent resistance and dielectric properties as well as in transparency, moisture resistance, oil resistance and damage resistance. Besides, the polyolefin laminate has excellent impact resistance. Therefore, the polyolefin laminate of the invention is favorably used as a packaging material for chemicals and foods.

The polyolefin laminate can be favorably used in the form of a sheet or a film as a packaging material for twist wrapping or other wrapping, but the laminate can be utilized also in other forms obtained by forming it through various forming processes.

Since the polyolefin laminate of the invention is excellent in transparency, moisture resistance, vacuum formability and pressure formability, the laminate is preferably used by forming it into PTP or blister pack.

When the polyolefin laminate is formed into PTP or blister pack, it is preferable to use the laminate in the unstretched state from the viewpoint of vacuum formability.

Specifically, the polyolefin laminate is subjected to vacuum forming or pressure forming to produce blisters having a shape fitted to the object to be packaged and then subjected to press-through packaging or blister packaging.

The vacuum forming or the pressure forming to produce blisters is carried out under the same conditions as those for the production of conventional films, and for example, it is carried out at a film surface temperature of usually about 30 to 300 °C, preferably about 50 to 150 °C, under a forming pressure of usually about 0.2 to 20 kg/cm$^2$-G, preferably 0.2 to 10 kg/cm$^2$-G.

Since the polyolefin laminate has excellent vacuum formability and pressure formability, a blister having a sharp edge at the border between the blister and the flange portion can be formed. On this account, the pitch (distance) between the blisters can be narrowed, and the number of blisters formed per film can be increased.

The present invention also provides various packages formed from the polyolefin laminate as a packaging material.

Because of non-toxicity of the polyolefin laminate, the packages formed from the laminate may contain arbitrary articles such as medicines, foods, daily goods and miscellaneous goods, but because of excellent transparency and impact strength of the packages, they can be particularly preferably used for packaging solid or liquid medicines such as those of tablets, capsules, powders or liquids, foods such as rice crackers, snack foods and cookies, cigarettes, tea bags, etc.

Examples of package types include bags, packs, PTP, blister packs, films, such as twist wrapping film, wrapping film, shrink film and easy peel film, containers formed from sheets, such as tetra pack, milk pack and laminate tube, and medical treatment containers, such as medicine bottle, vial, transfusion bottle, transfusion bag and syringe dialyzer (e.g., prefilled syringe).

## EFFECT OF THE INVENTION

The polyolefin multi-layer laminate according to the invention is excellent in oil resistance, damage resistance and interlaminar strength as well as in transparency and moisture resistance, so that it can be favorably used as a packaging material. The polyolefin multi-layer laminate is excellent also in vacuum formability and pressure formability, so that the laminate can be applied to various uses, particularly preferably to uses for medicines, medical treatments or foods by forming it into PTP or blister pack.

## EXAMPLE

The present invention is further described with reference to the following examples, but it should be construed that the invention is in no way limited to those examples.

Properties of the polyolefin laminates were evaluated in the following manner.

### Interlaminar strength

A co-extruded sheet obtained in each example was cut in the direction of extrusion (i.e., machine direction (MD)) to give a specimen having a width of 15 mm. The specimen was subjected to a T-peel test wherein the polypropylene composition layer was peeled from the cycloolefin resin layer at a peel rate of 300 mm/min using a tensile tester, to measure adhesion strength between those layers and to observe the peeled state.

### Internal haze

The sheet was immersed in benzyl alcohol filled in a quartz cell, to measure the internal haze.

Light transmittance

The light transmittance was measured in accordance with the method of ASTM D 1003.

Coefficient of moisture permeation

The coefficient of moisture permeation was measured under the conditions of a temperature of 40 °C and a relative humidity of 90 % in accordance with the method of ASTM F 1249.

Vacuum formability

The sheet was subjected to vacuum forming to prepare a cylindrical container having a diameter of 13 mm and a depth of 6 mm, and the formability of the sheet was judged by visual observation of the bottom edge.

AA: The bottom edge had good finish.
BB: The bottom edge was a little rounded.
CC: Because of insufficient extension of the sheet, no edge was formed on the bottom.

Preparation Example 1

Preparation of ethylene/α-olefin copolymer

Preparation of metallocene catalyst

10 Kilograms of Silica having been dried at 250 °C for 10 hours was suspended in 154 liters of toluene and cooled to 0 °C. To the suspension, 57.5 liters of a toluene solution of methylaluminoxane (Al: 1.33 mol/l) was dropwise added over a period of 1 hour. During the dropwise addition, the temperature of the system was maintained at 0 °C. Subsequently, the mixture was reacted at 0 °C for 30 minutes, then the temperature of the system was raised up to 95 °C over a period of 1.5 hours, and the reaction was run at that temperature for 20 hours. Then, the system was cooled to 60 °C, and the supernatant liquid was removed by decantation.

The resulting solid was washed twice with toluene and then resuspended in 100 liters of toluene. To the system, 16.8 liters of a toluene solution of bis(1,3-dimethylcyclopentadienyl)zirconium dichloride (Zr: 27.0 mmol/l) was dropwise added at 80 °C over a period of 30 minutes, and the mixture was reacted at 80 °C for 2 hours. Then, the supernatant liquid was removed, and the remainder was washed twice with hexane to obtain a solid catalyst containing 3.5 mg of zirconium based on 1 g of the solid catalyst.

Preparation of prepolymerized catalyst

To 87 liters of hexane containing 2.5 mol of triisobutylaluminum, 870 g of the solid catalyst obtained above and 260 g of 1-hexene were added, and prepolymerization of ethylene was performed at 35 °C for 5 hours to obtain a prepolymerized catalyst containing 10 g of an ethylene polymer based on 1 g of the solid catalyst.

Polymerization

In a continuous type fluidized bed gas phase polymerization reactor, copolymerization of ethylene and 1-octene was performed in the presence of the above-obtained prepolymerized catalyst to obtain an ethylene/1-octene copolymer.

The ethylene/1-octene copolymer had a density of 0.895 g/cm$^3$, MFR (measured at 190 °C under a load of 2,160 g) of 4.0 g/10 min, Mw/Mn of 2.0 and a melting point of 92 °C.

Example 1

Preparation of polypropylene composition (B)

70 Parts by weight of homopolypropylene (polypropylene (B-1)) having a density of 0.91 g/cm$^3$ and MFR (measured at 230 °C under a load of 2,160 g) of 6.0 g/10 min was mixed with 30 parts by weight of the ethylene/1-octene copolymer (ethylene/α-olefin copolymer (B-2)) obtained in Preparation Example 1, and the mixture was melt kneaded at 230 °C by a twin-screw extruder to obtain pellets of a polypropylene composition.

Preparation of laminate

The pellets of the polypropylene composition (B) and an ethylene/norbornene random copolymer (A) having MFR (measured at 260 °C under a load of 2,160 g) of 27 g/10 min were subjected to co-extrusion molding using a multi-layer T-die cast molding machine for producing a laminate of three layers of two different kinds. Thus, a sheet having a layer structure of (B)/(A)/(B) was obtained.

The thickness of each layer is as follows.

$$(B)/(A)/(B) = 30\ \mu m/200\ \mu m/30\ \mu m$$

The interlaminar strength, peeled state, internal haze, light transmittance, coefficient of moisture permeation and vacuum formability of the sheet are set forth in Table 1.

Example 2

Preparation of laminate

A sheet having the same layer structure as in Example 1 was prepared in the same manner as in Example 1, except that the ethylene/norbornene random copolymer (A) was replaced with an ethylene/tetracyclo[4.4.0.$1^{2,5}$.$1^{7,10}$]-3-dodecene random copolymer (A).

The interlaminar strength, peeled state, internal haze, light transmittance, coefficient of moisture permeation and vacuum formability of the sheet are set forth in Table 1.

Example 3

Preparation of polypropylene composition (B)

Pellets of a polypropylene composition were prepared in the same manner as in Example 1, except that an ethylene/1-octene copolymer (B-2) having a density of 0.915 g/$cm^3$, MFR (measured at 190 °C under a load of 2,160 g) of 7.0 g/10 min and Mw/Mn of 2.0, which had been prepared by the use of the same metallocene catalyst as used in Example 1, was used in place of the ethylene/1-octene copolymer (B-2) obtained in Preparation Example 1.

Preparation of laminate

A sheet having the same structure as in Example 1 was prepared in the same manner as in Example 1, except that the above-obtained polypropylene composition (B) was used.

The interlaminar strength, peeled state, internal haze, light transmittance, coefficient of moisture permeation and vacuum formability of the sheet are set forth in Table 1.

Comparative Example 1

Preparation of polypropylene composition (B)

Pellets of a polypropylene composition were prepared in the same manner as in Example 1, except that an ethylene/4-methyl-1-pentene copolymer having a density of 0.917 g/$cm^3$, MFR (measured at 190 °C under a load of 2,160 g) of 7.0 g/10 min and Mw/Mn of 4.0, which had been prepared by the use of a Ziegler catalyst containing titanium tetrachloride supported on magnesium chloride and diethyl aluminum monochloride, was used in place of the ethylene/1-octene copolymer (B-2) obtained in Preparation Example 1.

Preparation of laminate

A sheet having the same layer structure as in Example 1 was prepared in the same manner as in Example 1, except that the above-obtained polypropylene composition (B) was used.

The interlaminar strength, peeled state, internal haze, light transmittance, coefficient of moisture permeation and vacuum formability of the sheet are set forth in Table 1.

Table 1

| | Ex. 1 | Ex. 2 | Ex. 3 | Comp. Ex. 1 |
|---|---|---|---|---|
| Interlaminar strength (N/cm)<br>Peeled state | 5.2<br>Cohesive failure | 5.5<br>Cohesive failure | 4.8<br>Cohesive failure | 2.8<br>Interfacial failure |
| Internal haze (%) | 1.2 | 1.3 | 1.3 | 1.6 |
| Light transmittance (%) | 90 | 90 | 90 | 90 |
| Coefficient of moisture permeation ($g \cdot mm/m^2 \cdot c$) | 0.12 | 0.12 | 0.12 | 0.12 |
| Vacuum formability | good | good | good | good |

## Claims

1. A polyolefin multi-layer laminate comprising:

    (A) a cycloolefin resin layer, and
    (B) a layer of a polypropylene composition comprising 50 to 99 % by weight of (B-1) polypropylene and 1 to 50 % by weight of (B-2) an ethylene/$\alpha$-olefin copolymer obtained by polymerizing ethylene and an $\alpha$-olefin of 3 to 20 carbon atoms using a metallocene catalyst.

2. The polyolefin multi-layer laminate as claimed in claim 1, wherein the ethylene/$\alpha$-olefin copolymer (B-2) has a density of less than 0.930 $g/cm^3$.

3. The polyolefin multi-layer laminate as claimed in claim 1 or claim 2, which is obtained by co-extrusion molding of the cycloolefin resin (A) and the polypropylene composition (B).

4. A press-through pack or a blister pack formed from the polyolefin multi-layer laminate as claimed in any one of claims 1 to 3.